Europäisches Patentamt

European Patent Office

Office européen des brevets

(19)

(11) Veröffentlichungsnummer: **0 016 897**
**A1**

(12) # EUROPÄISCHE PATENTANMELDUNG

(21) Anmeldenummer: **79890056.9**

(22) Anmeldetag: **07.12.79**

(51) Int. Cl.³: **B 23 K 11/08**

(30) Priorität: **15.03.79 AT 1968/79**

(43) Veröffentlichungstag der Anmeldung: **15.10.80**
**Patentblatt 80/21**

(84) Benannte Vertragsstaaten: **BE CH DE FR GB LU NL SE**

(71) Anmelder: **VOEST-ALPINE Aktiengesellschaft,**
**Friedrichstrasse 4, A-1011 Wien (AT)**

(72) Erfinder: **Gram, Thomas, Fressnitz 79, A-8670 Krieglach**
**(AT)**
Erfinder: **Kowarsch, Walter, Fressnitz 81,**
**A-8670 Krieglach (AT)**

(74) Vertreter: **Kretschmer, Adolf, Dipl-Ing.,**
**Schottengasse 3a, A-1014 Wien (AT)**

(54) **Einrichtung zur Vermeidung einer Gratbildung bei Rohrschweissgeräten.**

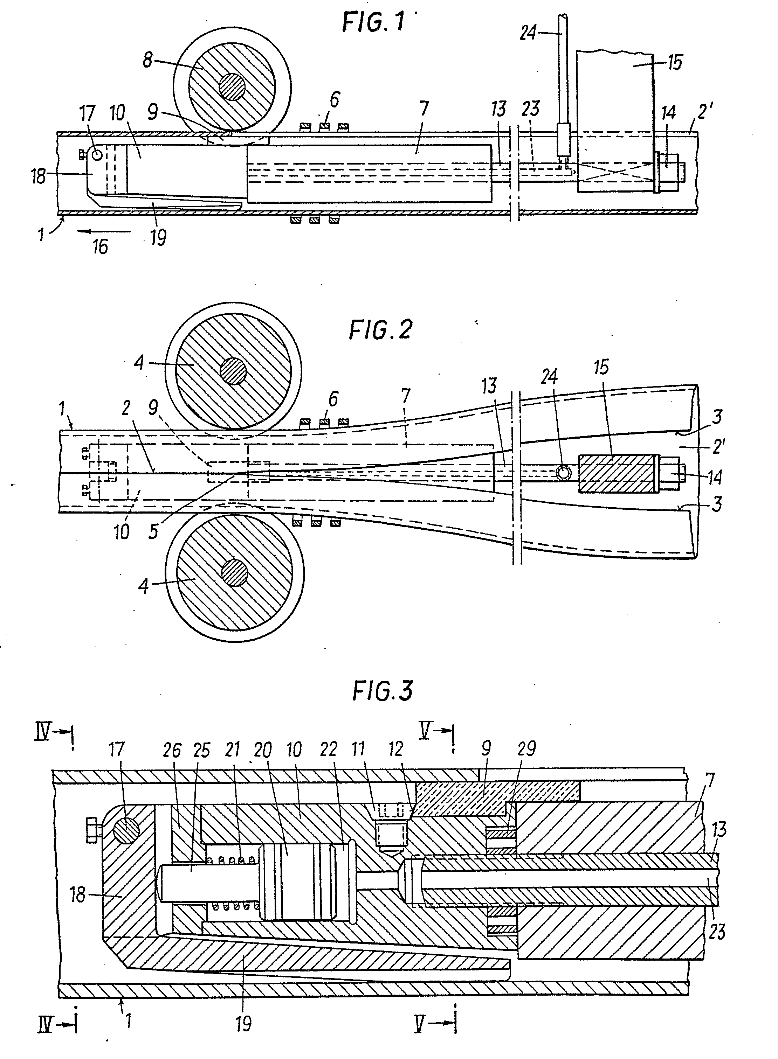

(57) Zur Vermeidung einer Innengratbildung beim Verschweißen von Stahlrohren wird eine Einrichtung vorgeschlagen, welche im Inneren des Rohres (1) abgestützt ist und mit welcher ein Gleitstein (9) von innen an die Schweißnaht (5, 28) hydraulisch gepreßt wird. Die Einrichtung ist hiebei an der Schweißnaht (5, 28) gegenüberliegenden Innenwand des Rohres (1) durch einen als Winkelhebel ausgebildeten Spreizhebel (18, 19) abgestützt, auf dessen einen Schenkel (18) ein hydraulisches Zylinderkolbenaggregat (20) wirkt, wodurch der andere zur Rohrachse im wesentlichen parallel angeordnete Schenkel (19) und damit der Gleitstein (9) gegen die Innenwandung des Rohres (1) gepreßt wird. (Fig. 3)

0016897

- 1 -

Einrichtung zur Vermeidung einer Gratbildung
bei Rohrschweißgeräten

Die Erfindung betrifft eine Einrichtung zur Vermeidung einer Gratbildung beim Schweißen von Stahlrohren an der Innenwandung derselben, bei welcher an einem in Längsrichtung des Rohres ortsfest gelagerten Halter im Bereich der Schweißstelle ein Gleitstein aus bei Schweißtemperatur beständigem Material angeordnet ist, der gegen die Schweißnaht an der Innenwandung des Rohres preßbar ist.

Beim Herstellen der in Längsrichtung eines Rohres verlaufenden Schweißnaht bilden sich üblicherweise Grate. Der an der Außenwandung sich bildende Grat wird üblicherweise in warmem Zustand angehobelt und die Entfernung dieses Grates bildet keine Schwierigkeiten. Bei den bekannten Verfahren wird der Innengrat durch spanabhebende Arbeit, u.zw. durch Fräsen oder Schneiden mittels eines Messers entfernt. Es ist aber kaum möglich, auf diese Art den Grat völlig glatt zu entfernen. Wenn ein Teil des Grates stehen bleibt, verbleiben die Unebenheiten an der Innenwandung des Rohres, und wenn der Grat zu tief abgenommen wird, so entsteht eine Schwächung der Rohrwandung, welche zum Platzen eines Rohres führen kann.

Aus der US-PS 2.400.889 ist eine Einrichtung zur Vermeidung einer Gratbildung beim Schweißen von Stahlrohren an der Innenwandung derselben bekannt geworden, bei welcher ein Gleitstein im Bereich der Schweißstelle gegen die Schweißnaht an die Innenwand des Rohres gepreßt wird. Der Gleitstein ist hierbei auf einem Ende eines doppelarmigen Hebels befestigt, an dessen anderem Ende eine Schraubenfeder angreift und den Gleitstein gegen die Schweißstelle drückt. Nachteilig ist dabei, daß, da der Anpreßdruck relativ groß sein muß, die Feder über einen relativ kurzen Weg einen relativ großen konstanten Anpreßdruck gewährleisten muß. Dies hat bei Toleranzungenauigkeiten entweder ein deutliches Absinken des Anpreßdruckes des Gleitsteines oder die Gefahr der Verformung des Rohres im Bereich des Gleitsteines zur Folge. Auch ist das Aufschieben eines neuen Rohres auf eine Vorrichtung deren Gleitstein unter hoher Federvorspannung steht, nicht leicht zu bewerkstelligen.

Es ist daher Aufgabe der vorliegenden Erfindung, eine eingangs genannte Einrichtung derartig weiter auszubilden, daß der zur Verhinderung einer Ausbildung eines Grates erforderliche Anpreßdruck erst nach dem Aufschieben des Rohres in exakt kontrollierbarer Weise ohne Gefahr einer Verformung des Rohres eingebracht wird, und auf diese Weise die Anbringung zu erleichtern und auch bei Toleranzungenauigkeiten einen vorgewählten Anpreßdruck zu gewährleisten.

Dies wird erfindungsgemäß dadurch erreicht, daß der Gleitstein in an sich bekannter Weise gegen die der Schweißnaht gegenüberliegende Innenwandung des Rohres abgestützt ist und daß der Gleitstein hydraulisch an die Schweißstelle anpreßbar ist. Durch die Maßnahme, den Gleitstein hydraulisch gegen die Schweißstelle preßbar auszubilden, kann der für das Verhindern einer Ausbildung eines Grates erforderliche Druck bei Toleranzungenauigkeiten des Innendurchmessers des Rohres sicher aufrecht erhalten werden.

Gleichzeitig erlaubt die erfindungsgemäße Ausbildung ein leichtes Aufschieben eines neuen Rohres auf die Einrichtung.

Bei einer vorteilhaften Ausführungsform der Erfindung ist am Halter ein Spreizhebel um eine quer zur Rohrachse liegende Achse schwenkbar angeordnet, auf welchen ein im Halter geführter hydraulischer Kolben wirkt, wobei der Gleitstein am Halter oder am Spreizhebel angeordnet ist. Damit kann der Gleitstein mit vorbestimmter Pressung an die Naht angepreßt werden und es kann damit auch Toleranzungenauigkeiten des Innendurchmessers des Rohres Rechnung getragen werden. Hiebei ist es lediglich erforderlich, den Druck des hydraulischen Mediums entsprechend einzustellen. Bei einer praktischen Ausführungsform der Erfindung ist der Spreizhebel abgewinkelt und der hydraulische Kolben in Richtung der Rohrachse verschiebbar geführt. Eine solche Ausbildung ermöglicht die erfindungsgemäße Einrichtung auch bei kleinen Rohrdurchmessern anzuwenden.

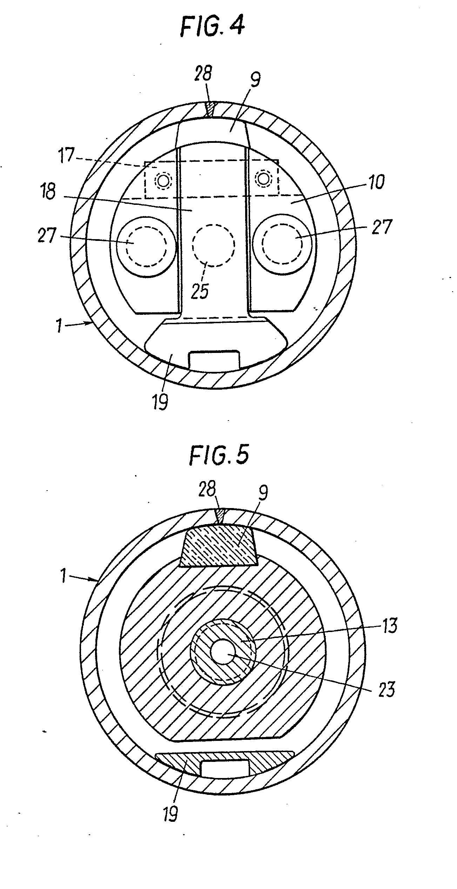

In der Zeichnung ist die Erfindung an Hand eines Ausführungsbeispieles schematisch veranschaulicht. Fig.1 und 2 zeigen die erfindungsgemäße Einrichtung an der Schweißstelle, wobei Fig.1 eine Seitenansicht und Fig.2 eine Draufsicht auf das zur Rohrform geschlossene Stahlband darstellt. Fig. 3 zeigt in größerem Maßstab die Vorrichtung innerhalb des Rohres. Fig.4 stellt einen Querschnitt durch das Rohr nach Linie IV-IV und Fig.5 einen Querschnitt nach Linie V-V der Fig.3 dar.

Wie in Fig.1 und 2 dargestellt ist, wird das Rohr aus einem Stahlband gerollt. 1 ist das bereits fertige Rohr, dessen Schweißnaht 2 bereits geschlossen ist. An der Stelle 1' weist das vorgerollte Stahlband noch einen offenen Schlitz 2' auf, wobei die Bandkanten mit 3 bezeichnet sind. Durch die beiden seitlich angeordneten Rollen 4 wird das Stahlband zum geschlossenen Rohr verformt, wobei die Verschweißung der Kanten an der Stelle 5 erfolgt, an welcher die Kanten 3 zusammentreffen.

Die Schweißung kann nun in beliebiger Art erfolgen, wie beispielsweise auch durch Autogenschweißung, Lichtbogenschweißung oder Widerstandspreßschweißung. In der Zeichnung ist eine bevorzugte Ausführungsform dargestellt, bei welcher die Schweißung durch Induktion erfolgt. Dabei stellt 6 die Windungen der Induktionsspule dar, die an einen Hochfrequenzgenerator angeschlossen ist. An der Berührungsstelle 5 der Bandkanten 3 erfolgt die Erhitzung auf Schweißtemperatur. Der Teil 7 ist ein sogenannter "Impeder" aus Ferrit, der den Effekt hat, daß er durch Verzerrung des elektromagnetischen Feldes die Konzentrierung der Erhitzung im Bereich der an der Berührungsstelle 5 einander berührenden Bandkanten 3 begünstigt, so daß die Schweißtemperatur erreicht wird.

An der Schweißstelle 5 ist eine Rolle 8 angeordnet, welche die Bandkanten genau einrichtet. An der Innenwandung des sich bildenden Rohres ist ein Gleitstein 9 angeordnet, welcher von innen her gegen die Schweißnaht gepreßt wird und auf diese Art ein Austreten der Schweiße an der Innenseite der Schweißnaht von vornherein verhindert. Dieser Gleitstein 9 besteht aus Aluminiumoxidkeramik, d.h. aus einem Metall, das sehr hart ist, der Schweißtemperatur, welche über 1350°C liegt, ohne weiteres standhält und daher beim Schweißvorgang nicht beeinträchtigt wird und sich nicht mit der Schweißnaht verbindet. Die mit der Innenwand des Rohres in Anlage stehende Oberfläche ist so gekrümmt, daß sie in der Form angepaßt ist, so daß der Gleitstein den zu verschweißenden Spalt und damit auch die Schweißnaht mehr oder weniger dicht abschließt.

Der Gleitstein 9 ist, wie in Fig.3 in größerem Maßstab dargestellt, an einem Halter 10 befestigt. 11 ist eine Schraube, welche die abgewinkelte Stirnfläche 12 übergreift. In den Halter 10 ist eine Stange 13 eingeschraubt, welche mittels einer Mutter 14 an einer ortsfesten Halterung 15 festgelegt ist. 29 ist eine Kontramutter. Das Rohr wird in Richtung des Pfeiles 16 vorgeschoben und der Halter 10 wird durch die ortsfeste Halterung 15 in Vorschubrichtung ortsfest festgelegt. Quer zur Rohrachse hat die Stange 13 eine gewisse Elastizität.

Am Halter 10 ist um eine Achse 17 schwenkbar ein Winkelhebel 18, 19 angelenkt. Auf den kürzeren Arm 18 dieses Winkelhebels wirkt ein hydraulischer Kolben 20, der entgegen der Kraft einer Rückholfeder 21 durch das dem Arbeitsraum 22 zugeführte Druckmedium beaufschlagt wird. Die Stange 13 weist eine Bohrung 23 auf, über welche das Druckmedium über eine Leitung 24 dem Arbeitsraum 22 zugeführt wird. Der auf den Hebelarm 18 wirkende Teil des Kolbens 20 ist als Stößel 25 ausgebildet, der durch einen Deckel 26 hindurchgeführt ist, der mit Schrauben 27 mit dem Halter 10 verschraubt ist. Auf diese Weise wird der längere Hebelarm 19 an die der Schweißnaht 28 gegenüberliegende Rohrwandung angepreßt, wodurch der Gleitstein 9 von innen gegen die Schweißnaht 28 bzw. gegen den zu verschweißenden Spalt gedrückt wird. Durch Einstellung des Druckes des hydraulischen Mediums im Arbeitsraum 22 kann die Anpreßkraft des Gleitsteines 9 geregelt werden. Überdies gibt diese Kontruktion durch den selbständig konstant geregelten Druck der Hydraulik die Möglichkeit, Toleranzungenauigkeiten auszugleichen.

- 6 -

Patentansprüche:

1. Einrichtung zur Vermeidung einer Gratbildung beim Schweißen von Stahlrohren an der Innenwandung derselben, bei welcher an einem in Längsrichtung des Rohres ortsfest gelagerten Halter im Bereich der Schweißstelle ein Gleitstein aus bei Schweißtemperatur beständigem Material angeordnet ist, der gegen die Schweißnaht an der Innenwandung des Rohres preßbar ist, dadurch gekennzeichnet, daß der Gleitstein (9) in an sich bekannter Weise gegen die der Schweißnaht (5, 28) gegenüberliegende Innenwandung des Rohres (1) abgestützt ist und daß der Gleitstein (9) hydraulisch an die Schweißstelle (5, 28) anpreßbar ist.

2. Einrichtung nach Anspruch 1, dadurch gekennzeichnet, daß am Halter (10) ein Spreizhebel (18, 19) um eine quer zur Rohrachse liegende Achse (17) schwenkbar angeordnet ist, auf welchen ein im Halter (10) geführter hydraulischer Kolben (20) wirkt, wobei der Gleitstein (9) am Halter (10) oder am Spreizhebel (18, 19) angeordnet ist.

3. Einrichtung nach Anspruch 2, dadurch gekennzeichnet, daß der Spreizhebel (18, 19) abgewinkelt ist und der hydraulische Kolben (20) in Richtung der Rohrachse verschiebbar geführt ist.

1979 11 28/kr

FIG.1

FIG.2

FIG.3

FIG. 4

FIG. 5

Europäisches
Patentamt

**EUROPÄISCHER RECHERCHENBERICHT**

0016897
Nummer der Anmeldung

EP 79890056.9

| Kategorie | Kennzeichnung des Dokuments mit Angabe, soweit erforderlich, der maßgeblichen Teile | betrifft Anspruch |
|---|---|---|
| A | DE – C – 560 002 (FARADIT-ISOLIER-ROHRWERKE MAX HAAS) <br> + Gesamt + <br> –– | |
| D | US – A – 2 400 889 (THE YODER COMPANY) <br> + Fig. 2 + <br> –––– | 1-3 |

**EINSCHLÄGIGE DOKUMENTE**

**KLASSIFIKATION DER ANMELDUNG (Int.Cl.³)**

B 23 K 11/08

**RECHERCHIERTE SACHGEBIETE (Int. Cl. ³)**

B 23 K 11/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

X   Der vorliegende Recherchenbericht wurde für alle Patentansprüche erstellt.

| Recherchenort | Abschlußdatum der Recherche | Prüfer |
|---|---|---|
| WIEN | 23-05-1980 | BENCZE |

EPA form 1503.1   06.78